# EUROPÄISCHE PATENTSCHRIFT

(11) **EP 3 695 892 B1**
(45) Veröffentlichungstag und Bekanntmachung des Hinweises auf die Patenterteilung: **09.03.2022**
(21) Anmeldenummer: 20153734.7
(22) Anmeldetag: 24.01.2020
(51) Int. Cl.: B01D 29/21, B01D 29/54, B01D 29/58, B01D 35/147, B01D 29/96

(54) **FILTERELEMENTGRUPPE FÜR EINE FILTEREINRICHTUNG**
FILTER ELEMENT GROUP FOR A FILTER DEVICE
GROUPE D'ÉLÉMENTS FILTRANT POUR UN DISPOSITIF DE FILTRE

(30) Priorität: 14.02.2019 DE 102019201991
(43) Veröffentlichungstag der Anmeldung: 19.08.2020
(73) Patentinhaber: Filtration Group GmbH, 74613 Öhringen (DE)
(72) Erfinder: STEINER, Gerhard, 74629 Pfedelbach-Unterhöfen (DE); HESSE, Gernot, 74613 Öhringen (DE); SCHÖPP, Wilhelm, 68804 Altlußheim (DE)
(74) Vertreter: BRP Renaud & Partner mbB Rechtsanwälte Patentanwälte Steuerberater

(56) Entgegenhaltungen:
- EP-A1- 3 078 406
- WO-A1-2008/143619
- DE-A1-102016 202 000
- US-A- 5 676 273

## Beschreibung

Die vorliegende Erfindung betrifft eine Filterelementgruppe für eine Filtereinrichtung zum Filtern eines Fluids mit den Merkmalen des Oberbegriffs des Anspruchs 1.

Eine gattungsgemäße Filterelementgruppe ist aus der DE 10 2016 202 000 A1 bekannt und umfasst ein ringförmiges Arbeitsfilterelement, ein ringförmiges Schutzfilterelement, eine Montageeinrichtung und eine Sicherungseinrichtung. Das Arbeitsfilterelement weist einen ringförmigen Arbeitsfilterkörper, eine erste Außenendscheibe und eine zweite Außenendscheibe auf. Der Arbeitsfilterkörper ist vom Fluid radial durchströmbar, umschließt einen Arbeitsfilterinnenraum in Umfangsrichtung, trägt an seinem ersten Axialende die erste Außenendscheibe und trägt an seinem zweiten Axialende die zweite Außenendscheibe. Das Schutzfilterelement ist im Arbeitsfilterinnenraum, also im Inneren des Arbeitsfilterelements angeordnet und weist einen ringförmigen Schutzfilterkörper, eine erste Innenendscheibe und eine zweite Innenendscheibe auf. Der Schutzfilterkörper ist vom Fluid radial durchströmbar, umschließt einen Schutzfilterinnenraum in Umfangsrichtung, trägt an seinem ersten Axialende die erste Innenendscheibe und trägt an seinem zweiten Axialende die zweite Innenendscheibe. Die erste Außenendscheibe ist als offene Endscheibe ausgestaltet und weist eine Fluidauslassöffnung der Filterelementgruppe auf, durch die das gefilterte Fluid von der Filterelementgruppe abströmt. Die erste Innenendscheibe ist als offene Endscheibe ausgestaltet und weist eine Verbindungsöffnung auf. Ferner ist die erste Innenendscheibe so an der ersten Außenendscheibe angeordnet, dass der Schutzfilterinnenraum durch die Verbindungsöffnung hindurch mit der Fluidauslassöffnung fluidisch verbunden ist. Mit anderen Worten, das gefilterte Fluid kann im Betrieb der jeweiligen Filtereinrichtung aus dem Schutzfilterinnenraum durch die Verbindungsöffnung und durch die Fluidauslassöffnung aus der Filterelementgruppe abströmen.

Die zweite Außenendscheibe ist ebenfalls als offene Endscheibe ausgestaltet und weist eine Montageöffnung auf, durch welche das Schutzfilterelement in den Arbeitsfilterinnenraum einsetzbar und daraus herausnehmbar ist. Die Montageeinrichtung weist eine Abdeckscheibe und eine Verbindungsstange auf, wobei die Abdeckscheibe einen in Umfangsrichtung umlaufenden Ringbereich aufweist, der außen an der zweiten Außenendscheibe axial anliegt. Die zweite Innenendscheibe ist als geschlossene Endscheibe ausgestaltet und ist über die Verbindungsstange zugfest sowie druckfest mit der Abdeckscheibe verbunden. Die Sicherungseinrichtung ist zwischen einem Sicherungszustand, in dem die Abdeckscheibe an der zweiten Außenendscheibe gegen Abziehen in Axialrichtung gesichert ist, und einem Entsicherungszustand verstellbar, in dem die Abdeckscheibe von der zweiten Außenendscheibe axial abziehbar ist.

Bei der bekannten Filterelementgruppe ist die Sicherungseinrichtung als Clipsverbindung oder als Bajonettverschluss ausgestaltet. Die Clipsverbindung weist mehrere Clipselemente auf, die am Außenumfang der Abdeckscheibe axial abstehen und dabei mit radial von der zweiten Außenendscheibe abstehenden Rastkonturen in Eingriff gebracht werden können. Zum Lösen dieser Clipsverbindung lassen sich die Abdeckscheibe und die zweite Außenendscheibe relativ zueinander in Umfangsrichtung verdrehen. Die Rastkonturen besitzen Rampen, die es ermöglichen, die Rastkonturen in der Umfangsrichtung aus den Clipselementen herauszubewegen. Beim Bajonettverschluss sind an der zweiten Außenendscheibe radial nach außen abstehende Zapfen gebildet, während an einem axial abstehenden Umfangsrand der Abdeckscheibe entsprechende Führungsnuten ausgeformt sind, in welche der jeweilige Zapfen axial einführbar und durch eine Verdrehung der Abdeckscheibe relativ zur zweiten Außenendscheibe in der jeweiligen Führungsnut fixierbar ist.

Damit sich bei der bekannten Filterelementgruppe die Sicherungseinrichtung nicht selbsttätig während des Betriebs der Filterelementgruppe vom Sicherungszustand in den Entsicherungszustand überführen kann, müssen die Haltekräfte innerhalb der Clipsverbindung bzw. innerhalb des Bajonettverschlusses relativ hoch gewählt werden, um ein selbsttätiges Verdrehen zwischen Abdeckscheibe und zweiter Außenendscheibe zu verhindern. Dies erschwert die Montage und insbesondere die Demontage zum Wechseln des Arbeitsfilterelements. Insbesondere dann, wenn nach längerem Gebrauch der Filterelementgruppe das Arbeitsfilterelement im Rahmen eines Wartungsintervalls ausgetauscht werden soll, da während des Betriebs der Filtereinrichtung die Möglichkeit besteht, dass sich Verunreinigungen zwischen Abdeckscheibe und zweiter Außenendscheibe anlagern und anhaften und so einen zusätzlichen Widerstand gegen ein Verdrehen zwischen Abdeckscheibe und zweiter Außenendscheibe erzeugen können.

Aus der EP 3 078 406 A1 ist eine Filtereinrichtung bekannt, die ein Filtergehäuse und ein in das Filtergehäuse eingesetztes, austauschbares Filterelement umfasst. Das Filtergehäuse weist einen Deckel auf, der mittels eines Bajonettverschlusses am Filtergehäuse axial gesichert ist. Außerdem sind zwei Schieber vorgesehen, mit denen der Deckel gegen ein Verdrehen am Filtergehäuse gesichert ist.

Aus der WO 2008/143619 A1 ist ein Filtergehäuse bekannt, dessen Deckel mittels eines Bajonettverschlusses am Filtergehäuse axial gesichert ist. Eine Verdrehsicherung zwischen Deckel und Filtergehäuse wird mittels eines verstellbar am Deckel gelagerten Sicherungsstifts erreicht, der federbelastet in eine Sicherungsstellung vorgespannt ist, in der er mit einer Sicherungskontur des Filtergehäuses in Eingriff steht.

Aus der US 5 676 273 A ist ein Behälter bekannt, der mit einem Deckel verschließbar ist. Der Deckel ist mittels eines Bajonettverschlusses am Behälter axial gesichert. Ein separater Sicherungsstift, der in zueinander fluchtende Öffnungen am Deckel und am Behälter einsteckbar ist, Isst sich dann eine Verdrehsicherung des Deckels am Behälter erzielen.

Die vorliegende Erfindung beschäftigt sich mit dem Problem, für eine Filterelementgruppe der vorstehend beschriebenen Art eine verbesserte Ausführungsform anzugeben, die sich insbesondere durch eine vereinfachte Montage, insbesondere im Wartungsfall, auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Sicherungseinrichtung so auszugestalten, dass sie im Sicherungszustand die Abdeckscheibe an der zweiten Außenendscheibe gegen ein Verdrehen in der Umfangsrichtung sichert. Da die Sicherungseinrichtung nunmehr selbst die Verdrehung zwischen Abdeckscheibe und zweiter Außenendscheibe verhindert, kann ein selbsttätiges Verdrehen zwischen Abdeckscheibe und zweiter Außenendscheibe ausgeschlossen werden. Hierdurch lassen sich insbesondere die Montage und die Demontage der Filterelementgruppe signifikant vereinfachen.

Gemäß einer vorteilhaften Ausführungsform kann die Sicherungseinrichtung ein bezüglich der Abdeckscheibe und bezüglich der zweiten Außenendscheibe separates Sicherungselement aufweisen, das zwischen einer Sicherungsstellung und einer Entsicherungsstellung verstellbar ist. Dieses Sicherungselement nimmt seine Sicherungsstellung im Sicherungszustand ein, während es im Entsicherungszustand seine Entsicherungsstellung einnimmt. Ferner erfolgt die Verstellung des Sicherungselements relativ zur Abdeckscheibe und relativ zur Außenendscheibe. Mit Hilfe des Sicherungselements weist die Sicherungseinrichtung ein zusätzliches Bauteil auf, das an der übrigen Filterelementgruppe verstellbar angeordnet ist. Auf diese Weise lassen sich der Sicherungszustand und der Entsicherungszustand einfach herstellen.

Erfindungsgemäß weist die Sicherungseinrichtung an der Abdeckscheibe im Ringbereich wenigstens eine axiale Durchgangsöffnung auf, während die Sicherungseinrichtung an der zweiten Außenendscheibe wenigstens einen axial abstehenden Vorsprung aufweist, der axial in die jeweilige Durchgangsöffnung hineinragt oder durch diese hindurchragt. Der jeweilige Vorsprung und die zugehörige Durchgangsöffnung sind dabei so aufeinander abgestimmt, dass sie im Sicherungszustand zusammenwirken, derart, dass dadurch die Abdeckscheibe an der zweiten Außenendscheibe gegen ein Verdrehen in der Umfangsrichtung gesichert ist. Mit anderen Worten, der in die zugehörige Durchgangsöffnung eingreifende Vorsprung bewirkt einen Formschluss in der Umfangsrichtung, der ein Verdrehen zwischen Abdeckscheibe und zweiter Außenendscheibe mechanisch blockiert.

Gemäß einer Weiterbildung kann das Sicherungselement in der Sicherungsstellung an einer von der zweiten Außenendscheibe abgewandten Außenseite der Abdeckscheibe mit dem jeweiligen Vorsprung zusammenwirken und diesen gegen ein Herausziehen aus der jeweiligen Durchgangsöffnung sichern. Mit anderen Worten, das Sicherungselement wirkt in der Sicherungsstellung mit dem durch die zugehörige Durchgangsöffnung hindurchgesteckten Vorsprung zusammen, derart, dass sich die Abdeckscheibe nicht mehr von der zweiten Außenendscheibe in der Axialrichtung abziehen lässt. Gleichzeitig bewirkt der in die Durchgangsöffnung eingesteckte Vorsprung die Verdrehsicherung zwischen Abdeckscheibe und zweiter Außenendscheibe.

Besonders vorteilhaft ist eine Weiterbildung, bei welcher der jeweilige Vorsprung eine radiale Sicherungsöffnung aufweist, wobei das Sicherungselement zumindest einen Sicherungsstift aufweist, der in der Sicherungsstellung an der Außenseite der Abdeckscheibe in die Sicherungsöffnung eingreift oder durch diese hindurchgreift. Auf diese Weise wird in der Sicherungsstellung ein Formschluss zwischen Sicherungsstift und Vorsprung realisiert, der den Vorsprung daran hindert, aus der Durchgangsöffnung herausgezogen zu werden. Zu diesem Zweck ist der jeweilige Sicherungsstift in der Radialrichtung größer dimensioniert als die jeweilige Durchgangsöffnung, so dass der Sicherungsstift nicht axial durch die Durchgangsöffnung hindurchführbar ist, wenn er in die jeweilige Sicherungsöffnung eingesteckt ist.

Zweckmäßig sind genau zwei derartige Durchgangsöffnungen vorgesehen, die an der Abdeckscheibe einander diametral gegenüberliegend angeordnet sind. Zweckmäßig sind auch genau zwei solche Vorsprünge vorgesehen, die an der zweiten Außenendscheibe einander diametral gegenüberliegend angeordnet sind. Hierdurch lässt sich die Sicherung gegen Verdrehen und/oder gegen ein axiales Abziehen der Abdeckscheibe relativ zur zweiten Außenendscheibe effektiv verbessern. Bei einer anderen Ausführungsform können grundsätzlich auch mehr als zwei Durchgangsöffnungen sowie mehr als zwei Vorsprünge vorgesehen sein, die dann in Umfangsrichtung grundsätzlich beliebig, vorzugsweise gleichförmig, verteilt angeordnet sind.

Bei einer anderen Weiterbildung kann das Sicherungselement genau zwei solche Sicherungsstifte aufweisen, die in der Sicherungsstellung jeweils mit einem der Vorsprünge zusammenwirken und in dessen Sicherungsöffnung eingreifen oder diese durchgreifen. Hierdurch lässt sich die Sicherung gegen ein axiales Abziehen der Abdeckscheibe von der zweiten Außenendscheibe signifikant verbessern. Auch hier ist grundsätzlich denkbar, das Sicherungselement mit drei oder mehr Sicherungsstiften auszustatten.

Gemäß einer besonders vorteilhaften Ausführungsform kann das Sicherungselement in der Entsicherungsstellung an der Abdeckscheibe so festgelegt sein, dass die Abdeckscheibe mittels des Sicherungselements von der zweiten Außenendscheibe abziehbar ist. Hierdurch erhält das Sicherungselement eine Zusatzfunktion, welche die Handhabung der Filterelementgruppe beim Montieren bzw. beim Demontieren, insbesondere im Wartungsfall, erheblich verbessert.

Gemäß einer Weiterbildung kann die Abdeckscheibe wenigstens eine axial abstehende Halterung aufweisen, mit der das Sicherungselement in der Entsicherungsstellung zum Festlegen des Sicherungselements an der Abdeckscheibe zusammenwirkt. Hierdurch vereinfacht sich die Realisierbarkeit der Ausführungsform, bei welcher das Sicherungselement in der Entsicherungsstellung die Handhabung der Filterelementgruppe vereinfacht.

Bei einer vorteilhaften Ausführungsform kann die jeweilige Halterung eine radiale Halteöffnung aufweisen, wobei das Sicherungselement zumindest einen Sicherungsstift aufweist, der in der Entsicherungsstellung in die Halteöffnung eingreift oder durch diese hindurchgreift. Hierdurch wird ein formschlüssiges Zusammenwirken zwischen Sicherungselement und der jeweiligen Halterung realisiert, wodurch insbesondere vergleichsweise hohe Haltekräfte übertragen werden können.

Bei einer vorteilhaften Weiterbildung können genau zwei solche Halterungen vorgesehen sein, die an der Abdeckscheibe einander diametral gegenüberliegend angeordnet sind. Auch hierdurch lassen sich die übertragbaren Kräfte zwischen Sicherungselement und Abdeckscheibe signifikant erhöhen. Bei einer anderen Ausführungsform können auch drei oder mehr derartige Halterungen vorgesehen sein, die dann in der Umfangsrichtung grundsätzlich beliebig, bevorzugt jedoch gleichförmig, verteilt angeordnet sind.

Bevorzugt wird auch hier eine Ausführungsform, bei der das Sicherungselement genau zwei solche Sicherungsstifte aufweist, die in der Entsicherungsstellung jeweils mit einer der Halterungen zusammenwirken und in deren Halteöffnung eingreifen oder diese durchgreifen. Auf diese Weise wird der Formschluss zwischen Sicherungselement und Abdeckscheibe verbessert. Auch hier ist grundsätzlich denkbar, dass drei oder mehr Sicherungsstifte am Sicherungselement ausgebildet sind.

Bei den Ausführungsformen, bei denen das Sicherungselement genau zwei Sicherungsstifte aufweist, kann zweckmäßig vorgesehen sein, dass das Sicherungselement einen Bügel besitzt, dessen Enden jeweils einen solchen Sicherungsstift bilden. Hierdurch lässt sich das Sicherungselement besonders einfach und somit preiswert herstellen, beispielsweise aus einem entsprechend gebogenen Metalldraht. Die Enden können dabei vom Bügel abgewinkelt sein, um den jeweiligen Sicherungsstift zu bilden.

Bei einer Ausführungsform, bei der ein solcher Vorsprung mit Durchgangsöffnung vorgesehen ist, kann der jeweilige Sicherungsstift des Sicherungselements in der Sicherungsstellung in die jeweilige Sicherungsöffnung eingesteckt sein. Bei einer Ausführungsform, bei welcher eine solche Halterung mit Halteöffnung vorgesehen ist, kann derselbe Sicherungsstift des Sicherungselements in der Entsicherungsstellung in diese Halteöffnung eingesteckt sein. Das bedeutet, dass der jeweilige Sicherungsstift des Sicherungselements wahlweise in die Durchgangsöffnung des jeweiligen Vorsprungs für die Sicherungsstellung und in die jeweilige Halteöffnung der jeweiligen Halterung für die Entsicherungsstellung einsteckbar ist.

Sofern am Sicherungselement genau zwei Sicherungsstifte ausgebildet sind, die über einen Bügel miteinander verbunden sind, können die beiden Sicherungsstifte zweckmäßig so orientiert sein, dass sie eine Schwenkachse definieren, um welche das Sicherungselement zwischen einer Arbeitsstellung und einer Ruhestellung an den Vorsprüngen bzw. an den Halterungen verschwenkbar gelagert ist. In der Arbeitsstellung lässt sich am Bügel die gesamte Filterelementgruppe anheben, wenn das Sicherungselement die Sicherungsstellung einnimmt, also wenn die Sicherungsstifte mit den Vorsprüngen zusammenwirken. Wenn dagegen das Sicherungselement die Entsicherungsstellung einnimmt, also wenn die Sicherungsstifte mit den Halterungen zusammenwirken, lässt sich in der Arbeitsstellung des Sicherungselements die Montageeinrichtung mit dem Schutzfilterelement am Bügel anheben. In der Ruhestellung dagegen liegt der Bügel auf dem Ringbereich der Abdeckscheibe auf, und zwar sowohl in der Sicherungsstellung als auch in der Entsicherungsstellung. Zweckmäßig kann der Bügel des Sicherungselements so geformt sein, dass er in der Ruhestellung radial innerhalb eines radialen Außenumfangs des Ringbereichs bzw. der Abdeckscheibe verbleibt. Hierdurch bildet der Bügel in der Ruhestellung keine radial über die Außenkontur der Filterelementgruppe vorstehende Störkontur.

Bei einer Ausführungsform, bei der zumindest ein solcher Vorsprung und zumindest eine solche Halterung vorgesehen sind, kann zweckmäßig vorgesehen sein, dass die jeweilige Halterung in der Umfangsrichtung gegenüber der jeweiligen Durchgangsöffnung versetzt angeordnet ist.

Eine andere Weiterbildung schlägt vor, dass das Sicherungselement in der Sicherungsstellung mit den Vorsprüngen in Eingriff steht, während das Sicherungselement in der Entsicherungsstellung mit den Halterungen in Eingriff steht. Zweckmäßig kann außerdem vorgesehen sein, dass das Sicherungselement manuell von der Sicherungsstellung in die Entsicherungsstellung und von der Entsicherungsstellung in die Sicherungsstellung überführbar ist. Sofern das Sicherungselement einen Bügel aufweist, dessen Enden die Sicherungsstifte bildet, lassen sich die Sicherungsstifte durch elastisches Verformen des Bügels aus den Sicherungsöffnungen bzw. aus den Halteöffnungen herausbewegen.

Eine andere Ausführungsform schlägt vor, dass sich der Arbeitsfilterkörper durchgehend von der ersten Außenendscheibe bis zur zweiten Außenendscheibe erstreckt. Somit besitzt das Arbeitsfilterelement nur einen einzigen, durchgehenden Filterkörper.

Bei einer alternativen Ausführungsform kann dagegen vorgesehen sein, dass der Arbeitsfilterkörper einen ringförmigen Hauptfilterkörper und einen ringförmigen Feinfilterkörper aufweist, wobei sich der Hauptfilterkörper von der ersten Außenendscheibe bis zu einer Zwischenscheibe erstreckt, während sich der Feinfilterkörper von dieser Zwischenscheibe bis zur zweiten Außenendscheibe erstreckt. Somit weist das Arbeitsfilterelement bei dieser Ausführungsform zwei separate Filterkörper auf, die über die Zwischenscheibe miteinander fest verbunden sind. Hauptfilterkörper und Feinfilterkörper besitzen zweckmäßig unterschiedliche Filtermaterialien mit unterschiedlichen Filterfeinheiten. Der Feinfilterkörper ist zweckmäßig zum Herausfiltern kleinerer Verunreinigungen ausgelegt, während der Hauptfilterkörper zweckmäßig zum Herausfiltern gröberer Verunreinigungen ausgelegt ist. Im Unterschied dazu ist der Schutzfilterkörper zum Herausfiltern vergleichsweise grober Verunreinigungen ausgelegt. Durch die beiden Filterkörper innerhalb des Arbeitsfilterkörpers lassen sich eine Hauptstromfiltration, die durch den Hauptfilterkörper erfolgt, und eine Nebenstromfiltration realisieren, die durch den Feinfilterkörper erfolgt.

Bei einer anderen Ausführungsform kann außen am Arbeitsfilterkörper axial zwischen der ersten Außenendscheibe und der zweiten Außenendscheibe eine das Arbeitsfilterelement in Umfangsrichtung einfassende Distanzeinrichtung angeordnet sein, die am Arbeitsfilterelement radial nach außen absteht und die zwischen ihrem radialen Innenumfang und ihrem radialen Außenumfang axial vom Fluid durchströmbar ist. Mit Hilfe dieser Distanzeinrichtung lässt sich das Arbeitsfilterelement beispielsweise in einem zylindrischen Gehäuse der jeweiligen Filtereinrichtung radial abstützen, ohne dabei einen in diesem Filtergehäuse die Filterelementgruppe in Umfangsrichtung einfassenden Ringraum in der Axialrichtung zu verblocken.

Beispielsweise kann die Distanzeinrichtung radial innen unmittelbar an der Außenkontur des Arbeitsfilterkörpers abgestützt sein. Sofern der Arbeitsfilterkörper in den Hauptfilterkörper und den Feinfilterkörper unterteilt ist, kann sich die Distanzeinrichtung zweckmäßig radial innen an der Zwischenscheibe abstützen. Grundsätzlich kann die Distanzeinrichtung integral an der Zwischenscheibe ausgeformt sein und dabei mehrere in Umfangsrichtung verteilte Distanzelemente aufweisen, die von der Zwischenscheibe radial nach außen abstehen. Diese Distanzelemente können beispielsweise als Stege ausgestaltet sein, die sich jeweils radial und axial erstrecken.

Alternativ dazu kann die Distanzeinrichtung einen bezüglich des Arbeitsfilterelements separaten elastischen Ring und mehrere auf den Ring aufgefädelte, separate Distanzelemente aufweisen, die sich radial am Arbeitsfilterelement abstützen. Zweckmäßig ist dabei der elastische Ring so dimensioniert, dass er die Distanzelemente radial gegen das Arbeitsfilterelement vorspannt. Hierdurch wird eine sichere Positionierung der Distanzelemente am Arbeitsfilterelement realisiert.

Zweckmäßig kann die Verbindungsstange der Montageeinrichtung als Rohr ausgestaltet sein. Vorzugsweise kann dieses Rohr eine perforierte Rohrwand besitzen, um einen Druckausgleich zwischen einem Rohrinnenraum und dem Arbeitsfilterinnenraum zu ermöglichen. Die Verbindungsstange kann mit der Abdeckscheibe und/oder mit der zweiten Innenendscheibe unlösbar verbunden sein, beispielsweise über zumindest eine Schweißverbindung. Alternativ dazu sind auch lösbare Verbindungen denkbar, wie zum Beispiel Rastverbindungen oder Clipsverbindungen. Die Verbindungsstange kann einteilig ausgeführt sein, so dass sie sich durchgehend von der Abdeckscheibe bis zur zweiten Innenendscheibe erstreckt. Ebenso ist eine mehrteilige Verbindungsstange denkbar, wobei die einzelnen Verbindungsstangenteile dann wieder unlösbar oder lösbar aneinander befestigt sein können.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch
- Fig. 1: eine isometrische Ansicht einer Filterelementgruppe im montierten Zustand,
- Fig. 2: eine isometrische Ansicht der Filterelementgruppe im montierten Zustand, jedoch bei einer anderen Ausführungsform,
- Fig. 3: eine isometrische Ansicht der Filterelementgruppe aus Figur 1, jedoch im demontierten Zustand,
- Fig. 4: eine isometrische Ansicht der Filterelementgruppe im Bereich einer Abdeckscheibe im Sicherungszustand,
- Fig. 5: eine isometrische Ansicht wie in Fig. 4, jedoch im Entsicherungszustand,
- Fig. 6: eine isometrische Detailansicht der Filterelementgruppe aus Fig. 1 im Bereich einer Distanzeinrichtung,
- Fig. 7: eine isometrische Detailansicht wie in Fig. 6, jedoch bei der in Fig. 2 gezeigten Ausführungsform,
- Fig. 8: ein in Längsrichtung verkürzter Längsschnitt durch die Filterelementgruppe aus Fig. 2 im montierten Zustand entsprechend Schnittlinien VIII in Fig. 9,
- Fig. 9: eine axiale Draufsicht auf die Filterelementgruppe aus Fig. 8,
- Fig. 10: ein vergrößertes Detail X aus Fig. 8,
- Fig. 11: ein vergrößertes Detail XI aus Fig. 8, und
- Fig. 12: ein vergrößertes Detail XII aus Fig. 8.

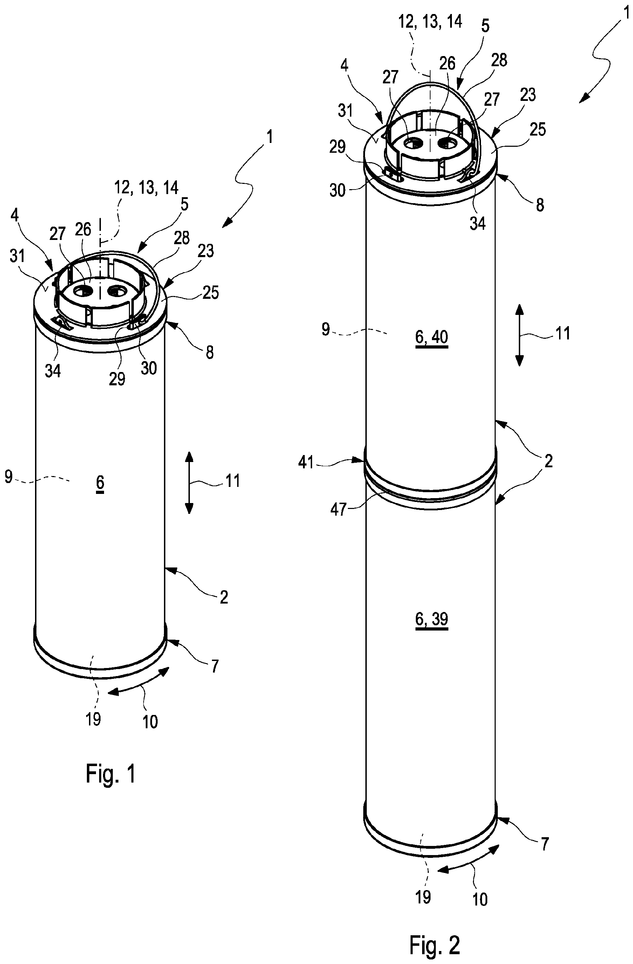

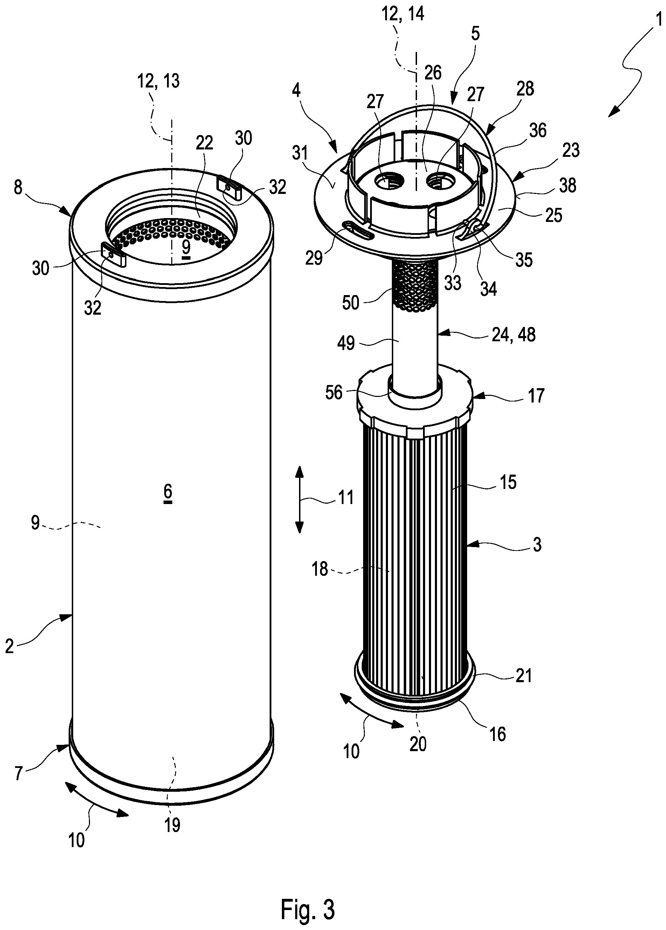

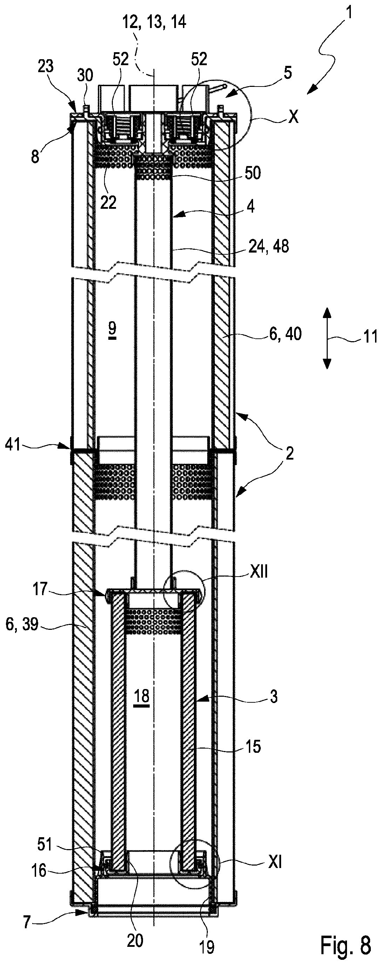

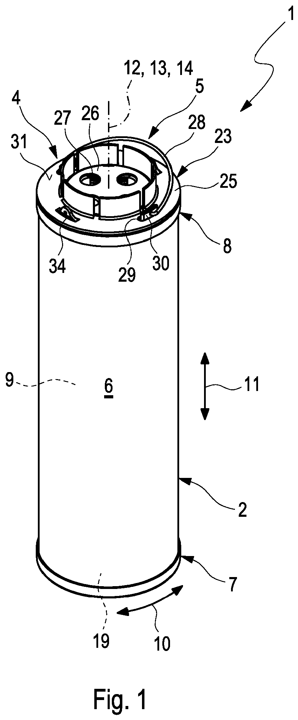

Entsprechend den Figuren 1 bis 3 und 8 umfasst eine Filterelementgruppe 1 ein ringförmiges Arbeitsfilterelement 2, das im montierten Zustand der Filterelementgruppe 1, der in den Figuren 1, 2 und 8 wiedergeben ist, außen angeordnet ist. Ferner umfasst die Filterelementgruppe 1 ein ringförmiges Schutzfilterelement 3, das in der Schnittansicht der Fig. 8 und im demontierten Zustand der Filterelementgruppe 1, der in Fig. 3 wiedergegeben ist, sichtbar ist und das im montierten Zustand der Figuren 1, 2 und 8 innen, also im Inneren des Arbeitsfilterelements 2 angeordnet ist. Ferner umfasst die Filterelementgruppe 1 eine Montageeinrichtung 4 und eine Sicherungseinrichtung 5. Die Filterelementgruppe 1 eignet sich für eine Verwendung in einer Filtereinrichtung zum Filtern eines Fluids. Beim Fluid handelt es sich bevorzugt um eine Flüssigkeit und weiterhin bevorzugt um ein Kühl-Schmier-Mittel, insbesondere ein Kühl-Schmier-Öl. Die mit wenigstens einem, vorzugsweise mehreren derartigen Filterelementgruppen ausgestattete Filtereinrichtung kommt beispielsweise bei einer Windkraftanlage zum Einsatz.

Entsprechend den Figuren 1 bis 3 und 8 weist das Arbeitsfilterelement 2 einen ringförmigen Arbeitsfilterkörper 6, eine untere oder erste Außenendscheibe 7 und eine obere oder zweite Außenendscheibe 8 auf. Der Arbeitsfilterkörper 6 ist vom zu reinigenden Fluid radial durchströmbar und umschließt hierzu einen Arbeitsfilterinnenraum 9 in Umfangsrichtung 10. Bezüglich der Filterelementgruppe 1 bzw. bezüglich des Arbeitsfilterelements 2 und des Schutzfilterelements 3 ist die Axialrichtung 11 durch die Längsmittelachse 12 der Filterelementgruppe 1 definiert, die im montierten Zustand der Figuren 1, 2 und 8 mit der Längsmittelachse 13 des Arbeitsfilterelements 2 und mit der Längsmittelachse 14 des Schutzfilterelements 3 zusammenfällt. Die Axialrichtung 11 erstreckt sich parallel zur jeweiligen Längsmittelachse 12, 13, 14 und ist in den Figuren durch einen Doppelpfeil angedeutet. Die Umfangsrichtung 10 läuft bezüglich der jeweiligen Längsmittelachse 12, 13, 14 um und ist in den Figuren durch einen Doppelpfeil angedeutet. Die Radialrichtung erstreckt sich senkrecht zur Axialrichtung.

Der Arbeitsfilterkörper 6 trägt an seinem unteren oder ersten Axialende die erste Außenendscheibe 7, während er an seinem oberen oder zweiten Axialende die zweite Außenendscheibe 8 trägt. Üblicherweise sind die Außenendscheiben 7, 8 mit dem jeweiligen Axialende des Arbeitsfilterkörpers 6 verklebt. Der Arbeitsfilterkörper 6 weist in üblicher Weise eine Filtermaterialstruktur auf, die für die jeweilige Filtrationsaufgabe ausgewählt ist.

Gemäß den Fig. 3 und 8 weist das Schutzfilterelement 3 einen ringförmigen Schutzfilterkörper 15, eine untere oder erste Innenendscheibe 16 sowie eine obere oder zweite Innenendscheibe 17 auf. Auch der Schutzfilterkörper 15 ist vom jeweiligen Fluid radial durchströmbar und umschließt dabei einen Schutzfilterinnenraum 18 in der Umfangsrichtung 10. Ferner trägt der Schutzfilterkörper 15 an seinem unteren oder ersten Axialende die erste Innenendscheibe 16, während er an seinem oberen oder zweiten Axialende die zweite Innenendscheibe 17 trägt. Zweckmäßig ist auch hier eine Klebverbindung zwischen der jeweiligen Innenendscheibe 16, 17 und dem jeweiligen Axialende des Schutzfilterkörpers 15 vorgesehen.

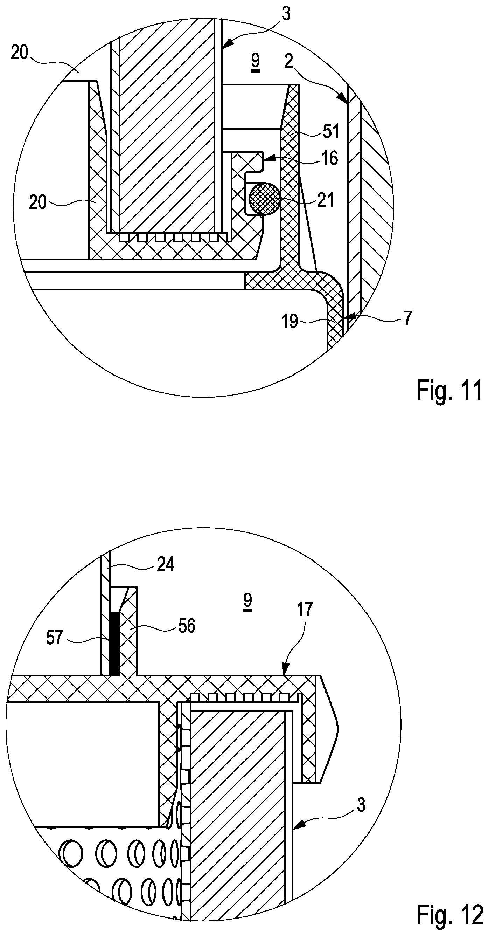

Die erste Außenendscheibe 7 ist als offene Endscheibe ausgestaltet, so dass sie eine zentrale Öffnung besitzt, die eine Fluidauslassöffnung 19 der Filterelementgruppe 1 bildet. Auch die erste Innenendscheibe 16 ist als offene Endscheibe ausgestaltet, so dass sie eine zentrale Öffnung besitzt, die eine Verbindungsöffnung 20 bildet. Im montierten Zustand der Figuren 1, 2 und 8 ist das Schutzfilterelement 3 so in das Arbeitsfilterelement 2 eingesetzt, dass die erste Innenendscheibe 16 an der ersten Außenendscheibe 7 angeordnet ist, und zwar derart, dass der Schutzfilterinnenraum 18 durch die Verbindungsöffnung 20 mit der Fluidauslassöffnung 19 fluidisch verbunden ist. Beispielsweise kann die erste Innenendscheibe 16 hierzu gemäß den Fig. 8 und 11 in einen Ringkragen 51 axial eingesetzt sein, der an einer dem Arbeitsfilterinnenraum 9 zugewandten Innenseite der ersten Außenendscheibe 7 angeordnet ist und dabei die Fluidauslassöffnung 19 einfasst. Die erste Innenendscheibe 16 ist dabei gegenüber der ersten Außenendscheibe 7, insbesondere gegenüber dem genannten Ringkragen 51, abgedichtet. Beispielsweise kann die erste Innenendscheibe 16 hierzu eine in den Fig. 3, 8 und 11 erkennbare Dichtung 21 aufweisen, die insbesondere als Radialdichtung ausgestaltet sein kann und mit besagtem Ringkragen 51 zusammenwirken kann.

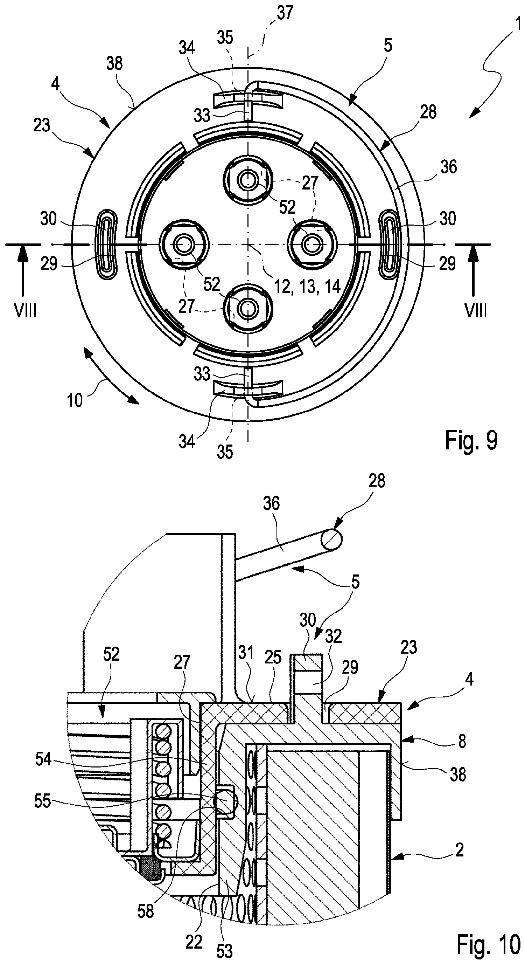

Die zweite Außenendscheibe 8 ist ebenfalls als offene Endscheibe ausgestaltet und weist eine zentrale Öffnung auf die eine Montageöffnung 22 bildet. Die Montageöffnung 22 ist so dimensioniert, dass das Schutzfilterelement 3 durch die Montageöffnung 22 in den Arbeitsfilterinnenraum 9 einsetzbar und auch wieder daraus herausnehmbar ist. Zum Montieren der Filterelementgruppe 1 wird das Schutzfilterelement 3 durch die Montageöffnung 22 in das Arbeitsfilterelement 2 eingesetzt. Zum Demontieren wird das Schutzfilterelement 3 durch die Montageöffnung 22 aus dem Arbeitsfilterelement 2 herausgenommen. Beim Montieren und Demontieren kommt die Montageeinrichtung 4 zum Einsatz. Diese weist eine Abdeckscheibe 23 und eine Verbindungsstange 24 auf. Die Abdeckscheibe 23 besitzt einen in Umfangsrichtung 10 umlaufenden Ringbereich 25 und einen vom Ringbereich 25 eingefassten Kernbereich 26. Dieser Kernbereich 26 weist optional zumindest eine Aufnahmeöffnung 27 auf, die beispielsweise zur Montage eines in den Fig. 8 und 10 gezeigten Überdruckventils 52 vorgesehen sein kann. Bei dem hier gezeigten Beispiel sind im Kernbereich 26 vier derartige Aufnahmeöffnungen 27 vorgesehen, so dass grundsätzlich mehrere Überdruckventile 52 montierbar sind. Ebenso ist denkbar, zumindest eine der Aufnahmeöffnungen 27 zur Montage eines Drucksensors oder dergleichen zu verwenden.

Im Montagezustand der Figuren 1, 2 und 8 liegt die Abdeckscheibe 23 mit ihrem Ringbereich 25 axial auf der zweiten Außenendscheibe 8 auf. Die zweite Innenendscheibe 17 ist als geschlossene Endscheibe ausgestaltet, so dass sie im Unterschied zu einer offenen Endscheibe den Innenraum des zugehörigen Filterkörpers, hier also den Schutzfilterinnenraum 18 am jeweiligen Axialende dicht verschließt. Die zweite Innenendscheibe 17 ist über die Verbindungsstange 24 zugfest und druckfest mit der Abdeckscheibe 23 verbunden. Dementsprechend können über die Verbindungsstange 24 Druckkräfte und Zugkräfte zwischen der Abdeckscheibe 23 und der zweiten Innenendscheibe 17 übertragen werden. Hierzu kann die Verbindungsstange 24 mit der zweiten Innenendscheibe 17 und/oder mit der Abdeckscheibe 23 verschweißt oder verclipst oder verschraubt oder vernietet oder auf sonstige geeignete Weise fest verbunden sein.

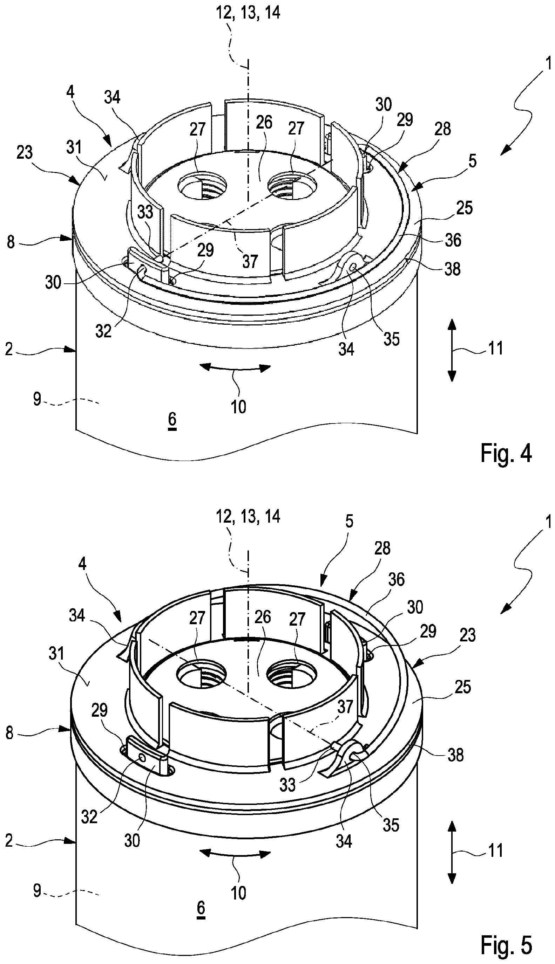

Die Sicherungseinrichtung 5 ist zwischen einem Sicherungszustand, der in den Figuren 1 und 4 wiedergegeben ist, und einem Entsicherungszustand, der in den Figuren 2, 3, 5, 8 und 9 wiedergegeben ist, verstellbar. Im Sicherungszustand sichert die Sicherungseinrichtung 5 die Abdeckscheibe 23 an der zweiten Außenendscheibe 8 gegen ein Abziehen in Axialrichtung 11. Im Entsicherungszustand lässt die Sicherungseinrichtung 5 dagegen ein axiales Abziehen der Abdeckscheibe 23 von der zweiten Außenendscheibe 8 zu. Mit anderen Worten, im Entsicherungszustand lässt sich die Filterelementgruppe 1 demontieren bzw. montieren. Im Sicherungszustand ist dagegen der montierte Zustand gesichert. Die Sicherungseinrichtung 5 ist hier außerdem so ausgestaltet, dass sie im Sicherungszustand die Abdeckscheibe 23 an der zweiten Außenendscheibe 8 gegen ein Verdrehen in der Umfangsrichtung 10 sichert. Mit anderen Worten, im Sicherungszustand lassen sich die Abdeckscheibe 23 und die zweite Außenendscheibe 8 nicht gegeneinander verdrehen.

Die Sicherungseinrichtung 5 wird nachfolgend anhand der Figuren 4 und 5 sowie 9 und 10 näher erläutert, wobei die entsprechenden Merkmale auch in den Figuren 1 bis 3 und 8 vorhanden und erkennbar sind. Entsprechend der hier gezeigten, bevorzugten Ausführungsform kann die Sicherungseinrichtung 5 ein Sicherungselement 28 aufweisen, das bezüglich der Abdeckscheibe 23 und bezüglich der zweiten Außenendscheibe 8 ein separates Bauteil repräsentiert. Dieses Sicherungselement 28 ist zwischen einer in den Figuren 1 und 4 gezeigten Sicherungsstellung und einer in den Figuren 2, 3, 5 und 8 bis 10 gezeigten Entsicherungsstellung verstellbar. Diese Verstellung erfolgt dabei relativ zur Abdeckscheibe 23 und relativ zur zweiten Außenendscheibe 8. Das Sicherungselement 28 nimmt seine Sicherungsstellung im Sicherungszustand ein bzw. definiert durch seine Sicherungsstellung den Sicherungszustand. Ferner nimmt das Sicherungselement 28 seine Entsicherungsstellung im Entsicherungszustand ein bzw. definiert durch seine Entsicherungsstellung den Entsicherungszustand. Zu diesem Zweck kann die Sicherungseinrichtung 5 an der Abdeckscheibe 23 im Ringbereich 25 zumindest eine axiale Durchgangsöffnung 29 aufweisen. Beim hier gezeigten Ausführungsbeispiel sind genau zwei derartige Durchgangsöffnungen 29 vorgesehen, die einander diametral gegenüberliegen. Ferner kann die Sicherungseinrichtung 5 an der zweiten Außenendscheibe 8 zumindest einen axial abstehenden Vorsprung 30 aufweisen, der im montierten Zustand in die jeweilige Durchgangsöffnung 29 hineinragt bzw. durch diese hindurchragt. Beim hier gezeigten Beispiel sind genau zwei derartige Vorsprünge 30 vorgesehen, die einander diametral gegenüberliegen. Im montierten Zustand der Figuren 1, 2, 4, 5 und 8 bis 11 ragt dabei jeder Vorsprung 30 durch jeweils eine Durchgangsöffnung 29. Die Innenkontur der jeweiligen Durchgangsöffnung 29 ist so auf die Außenkontur des jeweiligen Vorsprungs 30 abgestimmt, dass der jeweilige Vorsprung 30 im montierten Zustand mit der jeweiligen Durchgangsöffnung 29 eine formschlüssige Verdrehsicherung bildet und auf diese Weise im montierten Zustand sowohl im Sicherungszustand als auch im Entsicherungszustand die Abdeckscheibe 23 an der zweiten Außenendscheibe 8 gegen ein Verdrehen in der Umfangsrichtung 10 sichert.

Das Sicherungselement 28 wirkt nun in der Sicherungsstellung, also im Sicherungszustand der Figuren 1 und 4, an einer von der zweiten Außenendscheibe 8 abgewandten Außenseite 31 der Abdeckscheibe 23 mit dem jeweiligen Vorsprung 30 zusammen, derart, dass dieser gegen ein Herausziehen aus der jeweiligen Durchgangsöffnung 29 gesichert ist. Diese Sicherung wird dabei bevorzugt durch einen Formschluss realisiert. Bei den hier gezeigten Beispielen kann der jeweilige Vorsprung 30 hierzu optional eine radiale Sicherungsöffnung 32 aufweisen. Komplementär dazu besitzt das Sicherungselement 28 zumindest einen Sicherungsstift 33, der in der Sicherungsstellung an der Außenseite 31 der Abdeckscheibe 23 in die Sicherungsöffnung 32 eingreift oder durch diese hindurchgreift. Beim hier gezeigten Beispiel weist das Sicherungselement 28 zwei derartige Sicherungsstifte 33 auf, die in der Sicherungsstellung jeweils in eine Sicherungsöffnung 32 eingreifen. Die radiale Abmessung des Sicherungsstifts 33 ist dabei größer als die radiale Breite der Durchgangsöffnung 29, wodurch sich ein Formschluss ergibt, der es unmöglich macht, den jeweiligen Vorsprung 30 axial aus der jeweiligen Durchgangsöffnung 29 herauszubewegen.

Das Sicherungselement 28 ist in der Sicherungsstellung somit über die Vorsprünge 30 an der zweiten Außenendscheibe 8 festgelegt. Im Unterschied dazu kann gemäß den hier gezeigten bevorzugten Beispielen vorgesehen sein, dass das Sicherungselement 28 in der Entsicherungsstellung an der Abdeckscheibe 23 festgelegt ist, und zwar bevorzugt derart, dass die Abdeckscheibe 23 mit Hilfe des Sicherungselements 28 von der zweiten Außenendscheibe 8 abziehbar ist. Auf diese Weise lässt sich das Sicherungselement 8 in der Entsicherungsstellung zum Herausziehen des Schutzfilterelements 3 aus dem Arbeitsfilterelement 2 nutzen. Hierdurch lassen sich Montage und Demontage erheblich vereinfachen. Die Festlegung des Sicherungselements 28 an der Abdeckscheibe 23 im Entsicherungszustand kann beispielsweise mit Hilfe wenigstens einer Halterung 34 realisiert werden, die an der Abdeckscheibe 23 angeordnet ist und davon axial absteht. Bei den hier gezeigten Beispielen sind jeweils genau zwei derartige Halterungen 34 an der Abdeckscheibe 23 ausgebildet, die einander diametral gegenüberliegen. Das Sicherungselement 28 kann nun in der Entsicherungsstellung, die in den Figuren 2, 3, 5 und 8 bis 10 erkennbar ist, mit diesen Halterungen 34 zum Festlegen des Sicherungselements 28 an der Abdeckscheibe 23 zusammenwirken. Hierzu kann die jeweilige Halterung 34 optional eine radiale Halteöffnung 35 aufweisen, in die der jeweiligen Sicherungsstift 33 des Sicherungselements 28 zur Realisierung der Entsicherungsstellung eingreifen bzw. hindurchgreifen kann.

Beim hier vorgestellten bevorzugten Beispiel kann das Sicherungselement 28 einen Bügel 36 aufweisen, dessen Enden abgewinkelt sind und jeweils einen solchen Sicherungsstift 33 bilden. Das Sicherungselement 28 lässt sich beispielsweise aus einem Metalldraht herstellen. Gemäß einer bevorzugten Ausführungsform sind die beiden Sicherungsstifte 33 des Sicherungselements 28 räumlich so orientiert, dass sie eine Schwenkachse 37 definieren, um die das Sicherungselement 28 in der Sicherungsstellung und auch in der Entsicherungsstellung zwischen einer Arbeitsstellung, die in den Figuren 1 bis 3, 5, 8 und 10 erkennbar ist, und einer in den Fig. 4 und 9 gezeigten Ruhestellung verschwenkbar ist. In der Arbeitsstellung lässt sich das Sicherungselement 28 dazu verwenden, die gesamte Filterelementgruppe 1 anzuheben, wenn das Sicherungselement 28 wie in den Fig. 1 und 4 die Sicherungsstellung einnimmt. Nimmt das Sicherungselement 28 dagegen die Entsicherungsstellung wie in den Figuren 2, 3, 5 und 8 bis 10 ein, lässt sich das Sicherungselement 28 in seiner Arbeitsstellung zum Anheben der Montageeinrichtung 4 mit dem damit gekoppelten Schutzfilterelement 3 nutzen. Somit erleichtert das Sicherungselement 28 in seiner Arbeitsstellung die Montage und Demontage der Filterelementgruppe 1. In der Ruhestellung gemäß den Fig. 4 und 9 liegt der Bügel 36 auf dem Ringbereich 25 der Abdeckscheibe 23 auf. Die Formgebung des Bügels 36 ist dabei so gewählt, dass er in der Ruhestellung radial innerhalb eines radialen Außenumfangs 38 des Ringbereichs 25 bzw. der Abdeckplatte 23 verbleibt. Insbesondere liegt der Bügel 36 in der Ruhestellung radial zwischen besagtem Außenumfang 38 und den Halterungen 34 in der Sicherungsstellung bzw. radial zwischen dem Außenumfang 38 und den Durchgangsöffnungen 29 in der Entsicherungsstellung auf der Außenseite 31 der Abdeckscheibe 23 auf.

Um wie hier die Durchgangsöffnungen 29 und die Halterungen 34 an der Abdeckscheibe 23 gleichzeitig realisieren zu können, sind diese zweckmäßig in der Umfangsrichtung 10 zueinander versetzt angeordnet. Im bevorzugten Beispiel sind die Durchgangsöffnungen 29 gegenüber den Halterungen 34 um 90° in der Umfangsrichtung 10 versetzt.

Das Sicherungselement 28 ist aufgrund seiner geometrischen Form biegeelastisch, so dass es manuell im elastischen Bereich aufgebogen werden kann, um die Sicherungsstifte 33 aus den Sicherungsöffnungen 32 bzw. aus den Halteöffnungen 35 herausziehen zu können. Hierdurch lässt sich das Sicherungselement 28 einfach manuell zwischen der Sicherungsstellung und der Entsicherungsstellung umsetzen.

Bei der in den Figuren 1 und 3 gezeigten Ausführungsform erstreckt sich der Arbeitsfilterkörper 6 durchgehend von der ersten Außenendscheibe 7 bis zur zweiten Außenendscheibe 8. Im Unterschied dazu zeigen die Fig. 2 und 8 eine andere Ausführungsform, bei welcher der Arbeitsfilterkörper 6 einen ringförmigen Hauptfilterkörper 39 und einen ringförmigen Feinfilterkörper 40 aufweist. Ferner ist bei dieser Ausführungsform eine Zwischenscheibe 41 vorgesehen. Der Hauptfilterkörper 39 erstreckt sich von der ersten Außenendscheibe 7 bis zur Zwischenscheibe 41. Der Feinfilterkörper 40 erstreckt sich von der Zwischenscheibe 41 bis zur zweiten Außenendscheibe 8. Die Zwischenscheibe 41 ist zweckmäßig mit den daran anliegenden Axialenden des Hauptfilterkörpers 39 und des Feinfilterkörper 40 fest verbunden, insbesondere damit verklebt.

Während der Schutzfilterkörper 15 zum Zurückhalten relativ grober Verunreinigungen dient, soll der Hauptfilterkörper 6 relativ kleine Verunreinigungen aus dem Fluid herausfiltern. Beim zweistufigen Arbeitsfilterkörper 6 der Fig. 2 und 8 besitzen der Hauptfilterkörper 39 und der Feinfilterkörper 40 ebenfalls unterschiedliche Filtrationswirkungen. Dabei soll der Feinfilterkörper 40 kleinere Verunreinigungen aus dem Fluid herausfiltern als der Hauptfilterkörper 39. Dementsprechend besitzt der Feinfilterkörper 40 üblicherweise einen größeren Durchströmungswiderstand, so dass bei einer Parallelschaltung von Hauptfilterkörper 39 und Feinfilterkörper 40 nur ein vergleichsweise kleiner Teilstrom, sogenannter Nebenstrom, des Fluids durch den Feinfilterkörper 40 strömt, während der größere Rest, sogenannter Hauptstrom, des Fluids durch den Hauptfilterkörper 39 strömt. Durch diese Hauptstrom-Nebenstrom-Anordnung kann jedoch insgesamt im jeweiligen Fluidkreis eine hocheffiziente Filtrationswirkung für kleine Verunreinigungen über den Hauptfilterkörper 39 und für kleinste Verunreinigungen über den Feinfilterkörper 40 erreicht werden.

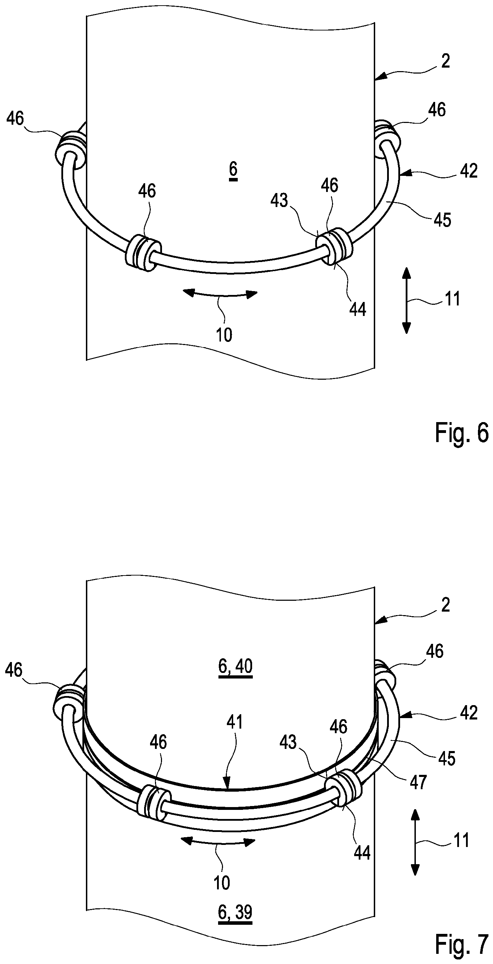

Bei der Verwendung der Filterelementgruppe 1 in einer Filtereinrichtung wird die Filterelementgruppe 1 in ein in der Regel zylindrischen Filtergehäuse (nicht gezeigt) eingesetzt, wobei der Innenquerschnitt des Filtergehäuses größer ist als der Außenquerschnitt der Filterelementgruppe 1, wodurch im Filtergehäuse ein Ringraum entsteht, der die Filterelementgruppe 1 in der Umfangsrichtung 10 umschließt. Da die Filterelementgruppe 1 in der Axialrichtung 11 vergleichsweise groß bauen kann, kann es aufgrund von Montagetoleranzen, insbesondere von Montagefehlern, dazu kommen, dass besagter Ringraum nach dem Einsetzen der Filterelementgruppe 1 in der Umfangsrichtung 10 keine konstante Spaltbreite aufweist. Hierdurch wird die Anströmung des Arbeitsfilterkörpers 6 asymmetrisch, was letztlich den Durchströmungswiderstand erhöhen und die Filtrationsleistung reduzieren kann. Um dies zu vermeiden, kann die Filterelementgruppe 1 gemäß den Figuren 6 und 7 mit einer Distanzeinrichtung 42 ausgestattet sein, die außen am Arbeitsfilterkörper 6 axial zwischen der ersten Außenendscheibe 7 und der zweiten Außenendscheibe 8 angeordnet ist und dabei das Arbeitsfilterelement 2 in Umfangsrichtung 10 umschließt. Die Distanzeinrichtung 42 steht dabei vom Arbeitsfilterelement 6 radial nach außen ab und ist zwischen ihrem radialen Innenumfang 43 und ihrem radialen Außenumfang 44 vom zu reinigenden Fluid axial durchströmbar bzw. umströmbar. Dabei kann sich die Distanzeinrichtung 42 radial innen, also mit ihrem Innenumfang 43 an dem Arbeitsfilterelement 2 abstützen. Im Beispiel der Figur 6 ist die Distanzeinrichtung 42 radial innen am Arbeitsfilterkörper 6 abgestützt. Im Beispiel der Figur 7 ist die Distanzeinrichtung 42 radial innen dagegen an der Zwischenscheibe 41 abgestützt. Dabei ist grundsätzlich denkbar, die Distanzeinrichtung 42 integral an der Zwischenscheibe 41 auszuformen, wobei die Distanzeinrichtung 42 dann mehrere in Umfangsrichtung 10 verteilte, integral an der Zwischenscheibe 41 ausgeformte Distanzelemente aufweist, die von der Zwischenscheibe 41 radial nach außen abstehen. Bei den Ausführungsformen der Figuren 6 und 7 ist die Distanzeinrichtung 42 dagegen als separate Einrichtung realisiert, so dass sie einen bezüglich des Arbeitsfilterelements 2 separaten elastischen Ring 45, zum Beispiel aus einem gummielastischen Kunststoff, und mehrere separate Distanzelemente 46 aufweist, die auf den Ring 45 aufgefädelt sind. Die Distanzelemente 46 sind dabei in Umfangsrichtung 10, insbesondere gleichförmig, verteilt am Ring 45 angeordnet. Die Distanzelemente 46 stützen sich radial am Arbeitsfilterelement 2 ab. Im Beispiel der Figur 6 stützen sich die Distanzelemente 46 radial am Arbeitsfilterkörper 6 ab. Im Beispiel der Figur 7 stützen sich die Distanzelemente 46 dagegen an der Zwischenscheibe 41 ab. Der Ring 45 kann nun zweckmäßig die Distanzelemente 46 radial gegen das Arbeitsfilterelement 2, also insbesondere gegen den Arbeitsfilterkörper 6 bzw. gegen die Zwischenscheibe 41 vorspannen. Zur besseren axialen Positionierung der Distanzeinrichtung 42 am Arbeitsfilterelement 2 kann gemäß Figur 7 die Zwischenscheibe 41 eine umlaufende Ringnut 47 aufweisen, in welche die walzenförmigen Distanzelemente 46 eingreifen. Durch die radiale Vorspannung ergibt sich eine effiziente axiale Positionierung der Distanzeinrichtung 42 am Arbeitsfilterelement 2.

Gemäß den Fig. 3 und 8 kann die Verbindungsstange 24 als Rohr 48 ausgestaltet sein, das bevorzugt eine Rohrwand 49 besitzt, die mit einer Perforation 50 versehen ist. Die Ausgestaltung der Verbindungsstange 24 als Rohr 48 ermöglicht die Übertragung großer Zugkräfte und Druckkräfte. Die Perforation 50 führt dabei zu einer signifikanten Gewichtsreduzierung.

Während des Betriebs der Filterelementgruppe 1 kann es zu Betriebszuständen kommen, in denen der Arbeitsfilterkörper 6 vom Fluid umgangen wird, so dass das Fluid nur den Schutzfilterkörper 15 durchströmt. Der Schutzfilterkörper 15 ist zum Zurückhalten relativ grober Verunreinigungen ausgelegt. Beispielsweise kann in einem Schmier- und/oder Kühlmittelkreis das jeweilige Fluid bei einer niedrigen Temperatur eine hohe Viskosität besitzen, so dass sich am Arbeitsfilterkörper 6 ein extrem hoher Gegendruck aufbaut. Zur Vermeidung einer Beschädigung des Arbeitsfilterelements 2 kann das weiter oben erläuterte wenigstens eine Überdruckventil 52 vorgesehen sein, das einen Bypass zur Umgehung des Arbeitsfilterkörpers 6 öffnet, so dass das zähe, ungereinigte Fluid in den Arbeitsfilterinnenraum 9 eintreten kann. Dort kann es den deutlich gröberen Schutzfilterkörper 15 durchströmen, der nur die groben Verunreinigungen herausfiltert. Wärmt sich das Fluid während des Betriebs auf, reduziert sich die Viskosität und der Durchströmungswiderstand des Arbeitsfilterkörpers 6 sinkt, wodurch das jeweilige Überdruckventil 52 allmählich schließt bis der gesamte Fluidstrom durch den Arbeitsfilterkörper 6 strömt.

Während des Filtrationsbetriebs setzt sich der Arbeitsfilterkörper 6 allmählich mit den herausgefilterten Verunreinigungen zu, so dass der Arbeitsfilterkörper 6 bzw. das Arbeitsfilterelement 2 im Rahmen vorbestimmter Wartungsintervalle ausgetauscht werden muss. Da der Schutzfilterkörper 3 nur für den Fall der hohen Viskosität des Fluids, also vergleichsweise selten genutzt wird, ist zu dem Zeitpunkt, zu dem das Arbeitsfilterelement 2 ausgetauscht werden muss, das Schutzfilterelement 3 regelmäßig noch voll funktionsfähig, so dass es grundsätzlich für mehrere Wartungszyklen des Arbeitsfilterelements 2 genutzt werden kann. Dementsprechend wird beim Austausch des Arbeitsfilterelements 2 das Schutzfilterelement 3 mit Hilfe der Montageeinrichtung 4 aus dem Arbeitsfilterelement 2 ausgebaut und in ein neues bzw. in ein gereinigtes Arbeitsfilterelement 2 eingebaut, wobei dann die montierte Filterelementgruppe 1 wieder in der Filtereinrichtung verwendet werden kann.

Gemäß Fig. 10 kann die zweite Außenendscheibe 8 einen axial nach innen vorstehenden Kragen 53 aufweisen, der die Montageöffnung 27 einfasst. Die Abdeckscheibe 23 kann einen dazu passenden Rand 54 aufweisen, der im montierten Zustand gemäß Fig. 10 in den Kragen 53 axial eintaucht und mittels einer Dichtung 55 dagegen abgedichtet ist. Diese Dichtung 55 ist im gezeigten Beispiel in eine Ringnut 58 eingesetzt, die am Kragen 53 ausgebildet ist.

Gemäß Fig. 12 kann die zweite Innenendscheibe 17 einen Aufnahmering 56 aufweisen, in den die Verbindungsstange 24 axial eingesteckt ist. Beispielsweise kann hier eine Verklebung 57 vorgesehen sein, um die Verbindungsstange 24 fest mit dem Schutzfilterelement 3 bzw. mit der zweiten Innenendscheibe 17 zu verbinden.

## Patentansprüche

1. Filterelementgruppe (1) für eine Filtereinrichtung zum Filtern eines Fluids,
- mit einem ringförmigen Arbeitsfilterelement (2),
- mit einem ringförmigen Schutzfilterelement (3),
- mit einer Montageeinrichtung (4),
- mit einer Sicherungseinrichtung (5),
- wobei das Arbeitsfilterelement (2) einen ringförmigen Arbeitsfilterkörper (6), eine erste Außenendscheibe (7) und eine zweite Außenendscheibe (8) aufweist,
- wobei der Arbeitsfilterkörper (6) radial vom Fluid durchströmbar ist, einen Arbeitsfilterinnenraum (9) in Umfangsrichtung (10) umschließt, an seinem ersten Axialende die erste Außenendscheibe (7) trägt und an seinem zweiten Axialende die zweite Außenendscheibe (8) trägt,
- wobei das Schutzfilterelement (3) im Arbeitsfilterinnenraum (9) angeordnet ist, einen ringförmigen Schutzfilterkörper (15), eine erste Innenendscheibe (16) und eine zweite Innenendscheibe (17) aufweist,
- wobei der Schutzfilterkörper (15) radial vom Fluid durchströmbar ist, einen Schutzfilterinnenraum (18) in Umfangsrichtung (10) umschließt, an seinem ersten Axialende die erste Innenendscheibe (16) trägt und an seinem zweiten Axialende die zweite Innenendscheibe (17) trägt,
- wobei die erste Außenendscheibe (7) als offene Endscheibe ausgestaltet ist und eine Fluidauslassöffnung (19) der Filterelementgruppe (1) aufweist,
- wobei die erste Innenendscheibe (16) als offene Endscheibe ausgestaltet ist und eine Verbindungsöffnung (20) aufweist,
- wobei die erste Innenendscheibe (16) so an der ersten Außenendscheibe (7) angeordnet ist, dass der Schutzfilterinnenraum (18) durch die Verbindungsöffnung (20) mit der Fluidauslassöffnung (19) fluidisch verbunden ist,
- wobei die zweite Außenendscheibe (8) als offene Endscheibe ausgestaltet ist und eine Montageöffnung (22) aufweist, durch welche das Schutzfilterelement (3) in den Arbeitsfilterinnenraum (9) einsetzbar und daraus herausnehmbar ist,
- wobei die Montageeinrichtung (4) eine Abdeckscheibe (23) und eine Verbindungsstange (24) aufweist,
- wobei die Abdeckscheibe (23) einen in Umfangsrichtung (10) umlaufenden Ringbereich (25) aufweist, der außen an der zweiten Außenendscheibe (8) axial anliegt,
- wobei die zweite Innenendscheibe (17) als geschlossene Endscheibe ausgestaltet ist und über die Verbindungsstange (24) zugfest sowie druckfest mit der Abdeckscheibe (8) verbunden ist,
- wobei die Sicherungseinrichtung (5) zwischen einem Sicherungszustand, in dem die Abdeckscheibe (23) an der zweiten Außenendscheibe (8) gegen Abziehen in Axialrichtung (11) gesichert ist, und einem Entsicherungszustand verstellbar ist, in dem die Abdeckscheibe (23) von der zweiten Außenendscheibe (8) axial abziehbar ist,
**dadurch gekennzeichnet,**
- **dass** die Sicherungseinrichtung (5) im Sicherungszustand die Abdeckscheibe (23) an der zweiten Außenendscheibe (8) gegen Verdrehen in der Umfangsrichtung (10) sichert.,- dass die Sicherungseinrichtung (5) an der Abdeckscheibe (23) im Ringbereich (25) wenigstens eine axiale Durchgangsöffnung (29) aufweist,
- **dass** die Sicherungseinrichtung (5) an der zweiten Außenendscheibe (8) wenigstens einen axial abstehenden Vorsprung (30) aufweist, der axial in die jeweilige Durchgangsöffnung (29) hineinragt oder durch diese hindurchragt,
- **dass** der jeweilige Vorsprung (30) im Sicherungszustand mit der jeweiligen Durchgangsöffnung (29) zusammenwirkt und so die Abdeckscheibe (23) an der zweiten Außenendscheibe (8) gegen Verdrehen in der Umfangsrichtung (10) sichert.

2. Filterelementgruppe (1) nach Anspruch 1,
**dadurch gekennzeichnet,**
**dass** die Sicherungseinrichtung (5) ein bezüglich der Abdeckscheibe (23) und bezüglich der zweiten Außenendscheibe (8) separates Sicherungselement (28) aufweist, das zwischen einer Sicherungsstellung, die es im Sicherungszustand einnimmt, und einer Entsicherungsstellung, die es im Entsicherungszustand einnimmt, bezüglich der Abdeckscheibe (23) und bezüglich der zweiten Außenendscheibe (8) verstellbar ist.

3. Filterelementgruppe (1) nach Anspruch 2,
**dadurch gekennzeichnet,**
**dass** das Sicherungselement (28) in der Sicherungsstellung an einer von der zweiten Außenendscheibe (8) abgewandten Außenseite (31) der Abdeckscheibe (23) mit dem jeweiligen Vorsprung (30) zusammenwirkt und diesen gegen Herausziehen aus der jeweiligen Durchgangsöffnung (29) sichert.

4. Filterelementgruppe (1) nach Anspruch 3,
**dadurch gekennzeichnet,**
- **dass** der jeweilige Vorsprung (30) eine radiale Sicherungsöffnung (32) aufweist,
- **dass** das Sicherungselement (28) zumindest einen Sicherungsstift (33) aufweist, der in der Sicherungsstellung an der Außenseite (31) der Abdeckscheibe (23) in die Sicherungsöffnung (32) eingreift oder durch diese hindurchgreift.

5. Filterelementgruppe (1) nach einem der Ansprüche 1 bis 4,
**dadurch gekennzeichnet,**
- **dass** zwei solche Durchgangsöffnungen (29) vorgesehen sind, die an der Abdeckscheibe (23) einander diametral gegenüberliegend angeordnet sind,
- **dass** zwei solche Vorsprünge (30) vorgesehen sind, die an der zweiten Außenendscheibe (8) einander diametral gegenüberliegend angeordnet sind.

6. Filterelementgruppe (1) nach den Ansprüchen 4 und 5,
**dadurch gekennzeichnet,**
**dass** das Sicherungselement (28) zwei solche Sicherungsstifte (33) aufweist, die in der Sicherungsstellung jeweils mit einem der Vorsprünge (30) zusammenwirken und in dessen Sicherungsöffnung (32) eingreifen oder diese durchgreifen.

7. Filterelementgruppe (1) nach einem der Ansprüche 2 bis 6,
**dadurch gekennzeichnet,**
**dass** das Sicherungselement (28) in der Entsicherungsstellung an der Abdeckscheibe (23) so festgelegt ist, dass die Abdeckscheibe (23) mittels des Sicherungselements (28) von der zweiten Außenendscheibe (8) abziehbar ist.

8. Filterelementgruppe (1) nach Anspruch 7,
**dadurch gekennzeichnet,**
**dass** die Abdeckscheibe (23) wenigstens eine axial abstehende Halterung (34) aufweist, mit der das Sicherungselement (28) in der Entsicherungsstellung zum Festlegen des Sicherungselements (28) an der Abdeckscheibe (23) zusammenwirkt.

9. Filterelementgruppe (1) nach Anspruch 8,
**dadurch gekennzeichnet,**
- **dass** die jeweilige Halterung (34) eine radiale Halteöffnung (35) aufweist,
- **dass** das Sicherungselement (28) zumindest einen Sicherungsstift (33) aufweist, der in der Entsicherungsstellung in die Halteöffnung (35) eingreift oder durch diese hindurchgreift.

10. Filterelementgruppe (1) nach Anspruch 8 oder 9,
**dadurch gekennzeichnet,**
**dass** zwei solche Halterungen (34) vorgesehen sind, die an der Abdeckscheibe (23) einander diametral gegenüberliegend angeordnet sind.

11. Filterelementgruppe (1) nach den Ansprüchen 9 und 10,
**dadurch gekennzeichnet,**
**dass** das Sicherungselement (28) zwei solche Sicherungsstifte (33) aufweist, die in der Entsicherungsstellung jeweils mit einer der Halterungen (34) zusammenwirken und in deren Halteöffnung (35) eingreifen oder diese durchgreifen.

12. Filterelementgruppe (1) nach Anspruch 6 oder 11,
**dadurch gekennzeichnet,**
**dass** das Sicherungselement (28) einen Bügel (36) aufweist, dessen Enden jeweils einen solchen Sicherungsstift (33) bilden.

13. Filterelementgruppe (1) nach Anspruch 12,
**dadurch gekennzeichnet,**
- **dass** die beiden Sicherungsstifte (33) eine Schwenkachse (37) definieren, um welche das Sicherungselement (28) zwischen einer Arbeitsstellung zum Anheben der Filterelementgruppe (1), wenn das Sicherungselement (28) die Sicherungsstellung einnimmt, oder zum Anheben der Montageeinrichtung (4) mit dem Schutzfilterelement (3), wenn das Sicherungselement (28) die Entsicherungsstellung einnimmt, und einer Ruhestellung verschwenkbar ist, in welcher der Bügel (36) auf dem Ringbereich (25) der Abdeckscheibe (23) aufliegt,
- **dass** der Bügel (36) so geformt ist, dass er in der Ruhestellung radial innerhalb eines radialen Außenumfangs (38) der Abdeckscheibe (23) verbleibt.

14. Filterelementgruppe (1) nach einem der Ansprüche 8 bis 13,
**dadurch gekennzeichnet,**
**dass** die jeweilige Halterung (34) in der Umfangsrichtung (10) gegenüber der jeweiligen Durchgangsöffnung (29) versetzt angeordnet ist.

## Claims

1. Filter element group (1) for a filter device for filtering a fluid,
- having an annular working filter element (2),
- having an annular protective filter element (3),
- having a mounting device (4),
- having a securing device (5),
- wherein the working filter element (2) has an annular working filter body (6), a first outer end plate (7) and a second outer end plate (7),
- wherein the working filter body (6) can have fluid flowing through it radially, encloses a working filter interior (9) in circumferential direction (10), supports the first outer end plate (7) on its first axial end and supports the second outer end plate (8) on its second axial end,
- wherein the protective filter element (3) is arranged in the working filter interior (9) and has an annular protective filter body (15), a first inner end plate (16) and a second inner end plate (17),
- wherein the protective filter body (15) can have fluid flowing through it radially, encloses a protective filter interior (18) in circumferential direction (10), supports the first inner end plate (16) on its first axial end and supports the second inner end plate (17) on its second axial end,
- wherein the first outer end plate (7) is designed as an open end plate and has a fluid outlet opening (19) of the filter element group (1),
- wherein the first inner end plate (16) is designed as an open end plate and has a connecting opening (20),
- wherein the first inner end plate (16) is arranged on the first outer end plate (7) such that the protective filter interior (18) is fluidically connected to the fluid outlet opening (19) by means of the connecting opening (20),
- wherein the second outer end plate (8) is designed as an open end plate and has a mounting opening (22) through which the protective filter element (3) can be set into and removed from the working filter interior (9),
- wherein the mounting device (4) has a cover plate (23) and a connecting rod (24),
- wherein the cover plate (23) has an annular region (25) encircling in circumferential direction (10) which rests axially on the outside of the second outer end plate (8),
- wherein the second inner end plate (17) is designed as a closed end plate and is connected via the connecting rod (24) to the cover plate (8) in a tensile-resistant and pressure-resistant manner,
- wherein the securing device (5) can be adjusted between a securing state, in which the cover plate (23) is secured on the second outer end plate (8) against being drawn off in axial direction (11), and a non-securing state, in which the cover plate (23) can be drawn off axially from the second outer end plate (8),
**characterised in**
- **that** the securing device (5) in the securing state secures the cover plate (23) on the second outer end plate (8) against twisting in the circumferential direction (10),
- **that** the securing device (5) has at least one axial through-opening (29) on the cover plate (23) in the annular region (25),
- **that** the securing device (5) has on the second outer end plate (8) at least one axially protruding projection (30) which protrudes axially into the respective through-opening (29) or protrudes through this,
- **that**, in the securing state, the respective projection (30) interacts with the respective through-opening (29) and thus secures the cover plate (23) on the second outer end plate (8) against twisting in the circumferential direction (10).

2. Filter element group (1) according to claim 1,
**characterised in**
**that** the securing device (5) has a securing element (28), separate with respect to the cover plate (23) and with respect to the second outer end plate (8), which can be adjusted between a securing position, which it assumes in the securing state, and a non-securing position, which it assumes in the non-securing state, with respect to the cover plate (23) and with respect to the second outer end plate (8).

3. Filter element group (1) according to claim 2,
**characterised in**
**that**, in the securing position on an outer side (31) of the cover plate (23) facing away from the second outer end plate (8), the securing element (28) interacts with the respective projection (30) and secures this from being drawn out of the respective through-opening (29).

4. Filter element group (1) according to claim 3,
**characterised in**
- **that** the respective projection (30) has a radial securing opening (32),
- **that** the securing element (28) has at least one securing pin (33) which, in the securing position on the outer side (31) of the cover plate (23), engages into the securing opening (32) or penetrates through this.

5. Filter element group (1) according to any of claims 1 to 4,
**characterised in**
- **that** two through-openings (29) of this sort are provided, which are arranged diametrically opposite one another on the cover plate (23),
- **that** two projections (30) of this sort are provided, which are arranged diametrically opposite one another on the second outer end plate (8).

6. Filter element group (1) according to claims 4 and 5,
**characterised in**
**that** the securing element (28) has two securing pins (33) of this sort, which in the securing position interact in each case with one of the projections (30) and engage in or through its securing opening (32).

7. Filter element group (1) according to any of claims 2 to 6,
**characterised in**
**that** the securing element (28) in the non-securing position is fastened to the cover plate (23) such that the cover plate (23) can be drawn off from the second outer end plates (8) by means of the securing element (28).

8. Filter element group (1) according to claim 7,
**characterised in**
**that** the cover plate (23) has at least one axially protruding holder (34) with which the securing element (28) in the non-securing position interacts for fixing the securing elements (28) to the cover plate (23).

9. Filter element group (1) according to claim 8,
**characterised in**
- **that** the respective holder (34) has a radial holding opening (35),
- **that** the securing element (28) has at least one securing pin (33) which engages in or through the holding opening (35) in the non-securing position.

10. Filter element group (1) according to claim 8 or 9,
**characterised in**
**that** two holders (34) of this sort are provided which are arranged diametrically opposite one another on the cover plate (23).

11. Filter element group (1) according to claims 9 and 10,
**characterised in**
**that** the securing element (28) has two securing pins (33) of this sort, which in the non-securing position interact in each case with one of the holders (34) and engage in or through their holding opening (35).

12. Filter element group (1) according to claim 6 or 11
**characterised in**
**that** the securing element (28) has a bracket (36), the ends of which form in each case one securing pin (33) of this sort.

13. Filter element group (1) according to claim 12,
**characterised in**
- **that** the two securing pins (33) define a pivot axis (37), about which the securing element (28) is pivotable between a working position for lifting the filter element group (1), when the securing element (28) assumes the securing position, or for lifting the mounting device (4) with the protective filter element (3), when the securing element (28) assumes the non-securing position, and a rest position, in which the bracket (36) rests on the annular region (25) of the cover plate (23),
- **that** the bracket (36) is shaped such that in the rest position it remains radially within a radial outer circumference (38) of the cover plate (23).

14. Filter element group (1) according to any of claims 8 to 13,
**characterised in**
**that** the respective holder (34) is arranged in the circumferential direction (10) offset with respect to the respective through-opening (29).

## Revendications

1. Groupe d'éléments de filtre (1) pour un appareil de filtration pour filtrer un fluide,
- avec un élément de filtre de travail (2) de forme annulaire,
- avec un élément de filtre de protection (3) de forme annulaire,
- avec un appareil de montage (4),
- avec un appareil de sécurité (5),
- dans lequel l'élément de filtre de travail (2) présente un corps de filtre de travail (6) de forme annulaire, un premier disque d'extrémité extérieur (7) et un second disque d'extrémité extérieur (8),
- dans lequel le corps de filtre de travail (6) peut être traversé radialement par le fluide, entoure un espace intérieur de filtre de travail (9) dans la direction périphérique (10), porte le premier disque d'extrémité extérieur (7) à sa première extrémité axiale et porte le second disque d'extrémité extérieur (8) à sa seconde extrémité axiale,
- dans lequel l'élément de filtre de protection (3) est agencé dans l'espace intérieur de filtre de travail (9), présente un corps de filtre de protection (15) de forme annulaire, un premier disque d'extrémité intérieur (16) et un second disque d'extrémité intérieur (17),
- dans lequel le corps de filtre de protection (15) peut être traversé radialement par le fluide, entoure un espace intérieur de filtre de protection (18) dans la direction périphérique (10), porte le premier disque d'extrémité intérieur (16) à sa première extrémité axiale et porte le second disque d'extrémité intérieur (17) à sa seconde extrémité axiale,
- dans lequel le premier disque d'extrémité extérieur (7) est conçu comme un disque d'extrémité ouvert et présente une ouverture de sortie de fluide (19) du groupe d'éléments de filtre (1),
- dans lequel le premier disque d'extrémité intérieur (16) est conçu comme un disque d'extrémité ouvert et présente une ouverture de liaison (20),
- dans lequel le premier disque d'extrémité intérieur (16) est agencé sur le premier disque d'extrémité extérieur (7) de sorte que l'espace intérieur de filtre de protection (18) est en communication fluidique avec l'ouverture de sortie de fluide (19) à travers l'ouverture de liaison (20),
- dans lequel le second disque d'extrémité extérieur (8) est conçu comme un disque d'extrémité ouvert et présente une ouverture de montage (22) à travers laquelle l'élément de filtre de protection (3) peut être inséré dans l'espace intérieur de filtre de travail (9) et en être retiré,
- dans lequel l'appareil de montage (4) présente un disque de recouvrement (23) et une tige de liaison (24),
- dans lequel le disque de recouvrement (23) présente une zone annulaire (25) s'étendant dans la direction périphérique (10), qui s'appuie axialement à l'extérieur sur le second disque d'extrémité extérieur (8),
- dans lequel le second disque d'extrémité intérieur (17) est conçu comme un disque d'extrémité fermé et est relié au disque de recouvrement (8) par la tige de liaison (24) de manière résistante à la traction et à la pression,
- dans lequel l'appareil de sécurité (5) peut être déplacé entre un état de sécurité, dans lequel le disque de recouvrement (23) est sécurisé sur le second disque d'extrémité extérieur (8) pour empêcher son retrait dans la direction axiale (11), et un état de déverrouillage, dans lequel le disque de recouvrement (23) peut être retiré axialement du second disque d'extrémité extérieur (8),
**caractérisé en ce que**
- l'appareil de sécurité (5), dans l'état de sécurité, sécurise le disque de recouvrement (23) sur le second disque d'extrémité extérieur (8) pour l'empêcher de tourner dans la direction circonférentielle (10),
- l'appareil de sécurité (5) présente au moins une ouverture de passage (29) axiale sur le disque de recouvrement (23) dans la zone annulaire (25),
- l'appareil de sécurité (5) présente sur le second disque d'extrémité extérieur (8) au moins une saillie (30) faisant saillie axialement, qui pénètre axialement dans l'ouverture de passage (29) respective ou qui traverse celle-ci,
- la saillie respective (30) coopère, dans l'état de sécurité, avec l'ouverture de passage (29) respective et sécurise ainsi le disque de recouvrement (23) sur le second disque d'extrémité extérieur (8) pour l'empêcher de tourner dans la direction circonférentielle (10).

2. Groupe d'éléments de filtre (1) selon la revendication 1,
**caractérisé en ce que**
l'appareil de sécurité (5) présente un élément de sécurité (28) séparé par rapport au disque de recouvrement (23) et par rapport au second disque d'extrémité extérieur (8), qui peut être déplacé par rapport au disque de recouvrement (23) et par rapport au second disque d'extrémité extérieur (8) entre une position de sécurité, qu'il prend dans l'état de sécurité, et une position de déverrouillage, qu'il prend dans l'état de déverrouillage.

3. Groupe d'éléments de filtre (1) selon la revendication 2,
**caractérisé en ce que**
l'élément de sécurité (28) coopère, dans la position de sécurité, sur une face extérieure (31) du disque de recouvrement (23) opposée au second disque d'extrémité extérieur (8), avec la saillie (30) respective et empêche celle-ci d'être extraite de l'ouverture de passage respective (29).

4. Groupe d'éléments de filtre (1) selon la revendication 3, **caractérisé en ce que**
- la saillie (30) respective présente une ouverture de sécurité (32) radiale,
- l'élément de sécurité (28) présente au moins une goupille de sécurité (33) qui, dans la position de sécurité, s'engage dans l'ouverture de sécurité (32) sur le côté extérieur (31) du disque de recouvrement (23) ou passe à travers celle-ci.

5. Groupe d'éléments de filtre (1) selon l'une quelconque des revendications 1 à 4, **caractérisé en ce que**
- deux ouvertures de passage (29) de ce type sont prévues, qui sont agencées de manière diamétralement opposée l'une à l'autre sur le disque de recouvrement (23),
- deux saillies (30) de ce type sont prévues, qui sont agencées de manière diamétralement opposée l'une à l'autre sur le second disque d'extrémité extérieur (8).

6. Groupe d'éléments de filtre (1) selon les revendications 4 et 5,
**caractérisé en ce que**
l'élément de sécurité (28) présente deux goupilles de sécurité (33) de ce type qui, dans la position de sécurité, coopèrent respectivement avec l'une des saillies (30) et s'engagent dans son ouverture de sécurité (32) ou traversent celle-ci.

7. Groupe d'éléments de filtre (1) selon l'une quelconque des revendications 2 à 6, **caractérisé en ce que**
l'élément de sécurité (28) est fixé sur le disque de recouvrement (23) dans la position de déverrouillage de sorte que le disque de recouvrement (23) peut être retiré du second disque d'extrémité extérieur (8) au moyen de l'élément de sécurité (28).

8. Groupe d'éléments de filtre (1) selon la revendication 7,
**caractérisé en ce que**
la rondelle de couvercle (23) présente au moins un support (34) qui dépasse axialement, avec lequel l'élément de verrouillage (28) interagit avec la rondelle de couvercle (23) en position de déverrouillage pour régler l'élément de verrouillage (28).

9. Groupe d'éléments de filtre (1) selon la revendication 8,
**caractérisé en ce que**
- le support respectif (34) présente une ouverture de retenue (35) radiale,
- l'élément de sécurité (28) présente au moins une goupille de sécurité (33) qui, dans la position de déverrouillage, s'engage dans l'ouverture de retenue (35) ou passe à travers celle-ci.

10. Groupe d'éléments de filtre (1) selon la revendication 8 ou 9,
**caractérisé en ce que**
deux supports (34) de ce type sont prévus, qui sont agencés de manière diamétralement opposée l'un à l'autre sur le disque de recouvrement (23).

11. Groupe d'éléments de filtre (1) selon les revendications 9 et 10,
**caractérisé en ce que**
l'élément de sécurité (28) présente deux goupilles de sécurité (33) de ce type qui, dans la position de déverrouillage, coopèrent respectivement avec un des supports (34) et s'engagent dans son ouverture de retenue (35) ou traversent celle-ci.

12. Groupe d'éléments de filtre (1) selon la revendication 6 ou 11,
**caractérisé en ce que**
l'élément de sécurité (28) présente un étrier (36) dont les extrémités forment respectivement une goupille de sécurité (33) de ce type.

13. Groupe d'éléments de filtre (1) selon la revendication 12,
**caractérisé en ce que**
- les deux goupilles de sécurité (33) définissent un axe de pivotement (37) autour duquel l'élément de sécurité (28) peut pivoter entre une position de travail pour soulever le groupe d'éléments de filtre (1) lorsque l'élément de sécurité (28) adopte la position de sécurité, ou pour soulever l'appareil de montage (4) avec l'élément de filtre de protection (3) lorsque l'élément de sécurité (28) adopte la position de déverrouillage, et une position de repos dans laquelle l'étrier (36) repose sur la zone annulaire (25) du disque de recouvrement (23),
- l'étrier (36) est formé de sorte que, dans la position de repos, il reste radialement à l'intérieur d'une périphérie extérieure (38) radiale du disque de recouvrement (23).

14. Groupe d'éléments de filtre (1) selon l'une quelconque des revendications 8 à 13, **caractérisé en ce que**
le support (34) respectif est agencé de manière décalée dans la direction périphérique (10) par rapport à l'ouverture de passage (29) respective.
